# FASCICULE DE BREVET EUROPEEN

(11) **EP 3 494 315 B1**
(45) Date de publication et mention de la délivrance du brevet: **17.01.2024**
(21) Numéro de dépôt: 17734384.5
(22) Date de dépôt: 30.05.2017
(51) Int. Cl.: F16B 5/06, F24S 25/632, F24S 25/634

(54) **AGRAFE DE MAINTIEN DE DEUX ÉLÉMENTS PLANS**
KLAMMER ZUM ZUSAMMENHALTEN ZWEIER FLÄCHIGER TEILE
CLIP FOR HOLDING TWO PLANAR ELEMENTS

(30) Priorité: 04.08.2016 FR 1657553
(43) Date de publication de la demande: 12.06.2019
(73) Titulaire: A. Raymond et Cie, 38000 Grenoble (FR)
(72) Inventeur: LEGALL, Antoine, 38600 Fontaine (FR); CHEVRIER, Jean-Baptiste, 38660 Saint Vincent de Mercuze (FR); PETRI, Richard, 38500 Voiron (FR); TURLOT, Emmanuel, 38000 Grenoble (FR)
(74) Mandataire: IP Trust
(86) Numéro de dépôt international: PCT/FR2017/051341
(87) Numéro de publication internationale: WO 2018/024951

(56) Documents cités:
- DE-U1-202008 013 005
- GB-A- 2 509 622
- US-A1- 2013 102 165
- US-A1- 2014 003 861
- US-B1- 6 279 207

## Description

### DOMAINE DE L'INVENTION

La présente invention concerne une agrafe de maintien de deux éléments plans. Elle trouve notamment son application pour fixer le cadre d'un module photovoltaïque sur un rail d'une structure porteuse.

### ARRIERE PLAN TECHNOLOGIQUE DE L'INVENTION

On connaît du document DE102014007971 une agrafe métallique permettant de maintenir l'un à l'autre deux éléments plans mis en contact au niveau de leurs faces principales. L'agrafe métallique en forme de U est constituée de deux ailes principales, définissant un logement dans lequel peut être inséré l'assemblage formé des deux éléments plans. Cette insertion conduit à la déformation élastique de l'agrafe et à l'application, par l'intermédiaire des deux ailes principales, de forces permettant de maintenir les deux éléments plans l'un à l'autre.

Un des deux éléments plans peut-être constitutif du cadre d'un module photovoltaïque, et l'autre élément plan constitutif d'un rail d'une structure porteuse. Une pluralité de telles agrafes peut être placée en périphérie du module pour le fixer à la structure porteuse, celle-ci pouvant être disposée, par exemple, sur le toit d'une habitation. Le module peut être soumis à de fortes sollicitations, par exemple par les efforts appliqués par le vent, tendant à désolidariser le module de la structure porteuse. Or, l'agrafe qui vient d'être décrite présente une faible résistance mécanique, l'une des ailes principales de l'agrafe en U pouvant être aisément rompue sous l'effet de ces sollicitations.

Le document GB2509622 décrit une agrafe en forme de U pour maintenir deux éléments plans assemblés l'un à l'autre au niveau de leur face principale. L'agrafe comprend deux parois latérales chacune munie d'une rainure définissant deux bras sur chaque paroi et des griffes saillantes débouchant dans la rainure et destinées à pénétrer dans les éléments à assembler. US2013102165A1 décrit une agrafe connue.

### OBJET DE L'INVENTION

La présente invention vise à pallier tout ou partie de cet inconvénient.

### BREVE DESCRIPTION DE L'INVENTION

En vue de la réalisation de l'un de ces buts, l'objet de l'invention propose une agrafe selon la revendication 1
Selon d'autres caractéristiques avantageuses et non limitatives de l'invention, prises seules ou selon toute combinaison techniquement réalisable :
- les parois sont formées d'une bande de métal pliée à angle droit ;
- les extrémités de la bande de métal présentent des motifs complémentaires emboîtés l'un à l'autre ;
- les extrémités de la bande de métal présentent chacune un pliage définissant deux surfaces planes d'extrémité, les deux surfaces planes d'extrémité étant en butée l'une contre l'autre ;
- une au moins des surfaces d'extrémités présente au moins une languette de blocage pour bloquer tout glissement des surfaces d'extrémité l'une contre l'autre ;
- chaque paroi latérale présente un bras flexible.

### BREVE DESCRIPTION DES DESSINS

D'autres caractéristiques et avantages de l'invention ressortiront de la description détaillée de l'invention qui va suivre en référence aux figures annexées sur lesquels :
- La figure 1 représente une vue en perspective d'une agrafe de maintien non conforme à l'invention ;
- la figure 2 représente une vue en coupe d'un exemple d'utilisation de l'agrafe de la figure 1 ;
- Les figures 3a et 3b représentent deux variantes d'un second mode de réalisation d'une agrafe conforme à l'invention ;
- La figure 4 représente une portion d'un rail adapté pour recevoir une agrafe conforme au second mode de réalisation de l'invention ;
- La figure 5 représente une vue en perspective d'un exemple d'utilisation d'une agrafe conforme au second mode de réalisation de l'invention.

### DESCRIPTION DETAILLEE DE L'INVENTION

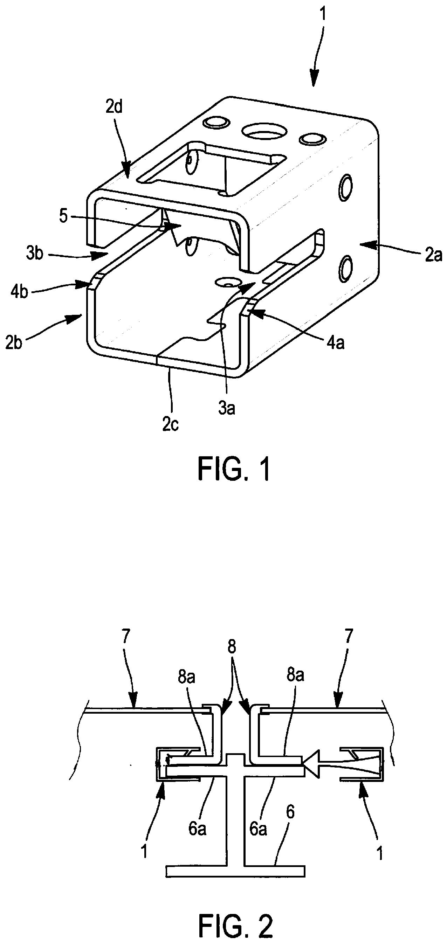

La figure 1 représente une agrafe 1 qui ne fait pas l'objet de l'invention.

Elle est constituée de deux parois latérales 2a, 2b, d'une paroi supérieure 2c, et d'une paroi inférieure 2d. Les quatre parois 2a, 2b, 2c, 2d définissent un pavé droit, c'est-à-dire un volume fermé (sur au moins 4 de ses faces) de section rectangulaire ou carré.

Les parois latérales 2a, 2b de l'agrafe 1 sont chacune munies d'une rainure 3a, 3b débouchante d'un même côté de l'agrafe. Ces rainures 3a, 3b sont configurées pour permettre d'insérer l'agrafe 1 sur les deux éléments plans assemblés l'un à l'autre et les maintenir l'un contre l'autre. A ce titre, la hauteur des rainures 3a, 3b est ajustée pour correspondre sensiblement à l'épaisseur de l'assemblage formé des deux éléments plans. Du côté de la face de l'agrafe 1 sur laquelle elles débouchent, les rainures 3a, 3b peuvent présenter chacune un chanfrein d'entrée 4a, 4b facilitant l'insertion de l'agrafe 1 sur les éléments plans. Les rainures 3a, 3b, peuvent présenter une profondeur qui s'étend sur la moitié au moins de la longueur d'une paroi latérale. Toutefois, et de préférence, on veillera à ne pas leur donner une profondeur trop importante qui conduirait à fragiliser la pièce lorsque les efforts appliqués sur les éléments plans tendent à les écarter l'un de l'autre.

Avantageusement, l'agrafe 1 est en métal et réalisée d'une seule pièce ce qui lui permet d'être particulièrement robuste, les éléments de liaisons pouvant former des zones privilégiées de rupture. À titre d'exemple, l'agrafe 1 peut être formée d'une bande de métal pliée à angle droit pour définir les quatre parois 2a, 2b, 2c, 2d. Avantageusement, les extrémités de la bande de métal présentent des profils complémentaires qui, lorsque la bande de métal a été pliée pour former l'agrafe 1, peuvent s'emboîter l'un à l'autre.

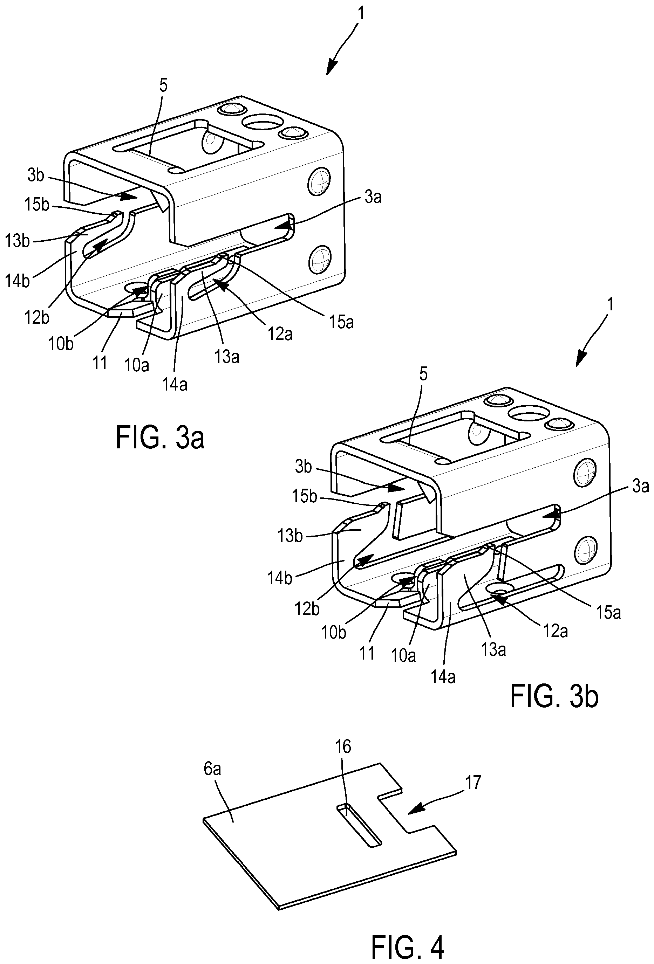

Alternativement, les deux extrémités de la bande de métal peuvent présenter chacune un pliage définissant deux surfaces planes d'extrémité 10a, 10b. Les deux surfaces planes d'extrémité 10a, 10b viennent en butée l'une contre l'autre lorsque la bande de métal a été pliée pour former l'agrafe 1. Une des extrémités peut présenter au moins une languette de blocage 11, afin de bloquer tout glissement d'une surface plane d'extrémité 10a, 10b contre l'autre. Une telle configuration est représentée sur les figures 3a, 3b qui seront décrites plus en détail ultérieurement.

L'une et l'autre des liaisons qui viennent d'être décrites sont particulièrement robustes aux efforts qui peuvent s'appliquer sur l'agrafe 1. La bande de métal, les motifs à ses extrémités, les rainures, la ou les languettes 11 et toutes les autres découpes ou déformation de l'agrafe 1 peuvent être formées avant le pliage de la bande de métal, par exemple par des techniques de découpe - emboutissage, des traitements thermiques ou humides. De manière optionnelle, on peut former sur la bande de métal, une pluralité de bossages, afin d'éviter que des surfaces planes de plusieurs bandes de métal se collent l'une à l'autre lors de leur fabrication.

Ainsi que cela est représenté sur les figures 1, 3a et 3b, la paroi inférieure 2c et/ou la paroi supérieure 2d de l'agrafe 1 est munie d'une griffe 5 formée par découpe et pliage de la bande de métal lors de sa fabrication. La (ou les) griffe 5 est configurée pour appliquer une pression sur les éléments plans lorsque l'agrafe 1 est positionnée. A cet effet, la griffe 5 est orientée vers l'intérieur de l'agrafe, dans le sens de l'insertion des deux éléments plans comme cela est bien représenté sur les figures.

Selon l'invention, dont deux exemples différents sont représentés sur les figures 3a et 3b, on forme sur les parois latérales 2a, 2b une fente 12a, 12b débouchant dans la rainure 3a, 3b. La fente 12a, 12b définit un bras flexible 13a, 13b. Chaque bras flexible 13a, 13b est solidaire du reste de la paroi 2a, 2b par l'intermédiaire d'une zone de flexion 14a, 14b. L'extrémité libre de chaque bras porte une butée 15a, 15b légèrement en surplomb des arêtes définissant la rainure 3a, 3b, et donc en saillie dans cette rainure. En d'autres termes, la butée 15a, 15b obture partiellement la rainure 3a, 3b lorsque l'agrafe 1 n'est pas positionnée sur les éléments plans qu'elle est destinée à maintenir l'un à l'autre. La flexion d'un bras 13a, 13b dans le plan défini par la paroi 2a, 2b, au niveau de la zone de flexion 14a, 14b, permet de libérer l'accès au fond de la rainure.

Selon la forme des fentes 12a, 12b formées sur les parois latérales opposées 2a, 2b, on peut contrôler la rigidité de la zone de flexion 14a, 14b reliant chaque bras flexible au reste de l'agrafe 1. Ainsi, et comme cela est représenté sur les figures 13a et 13b ont peut former des bras flexibles 3a, 3b présentant des formes variées en choisissant la géométrie des fentes 12a, 12b, ce qui permet de contrôler la rigidité à la flexion de chacun de ces bras.

Lors de l'insertion de l'agrafe 1 sur deux éléments plans assemblés l'un à l'autre, les efforts qui s'appliquent sur les butées 15a, 15b lorsque l'un au moins de ces éléments entre en contact avec celles-ci entraînent la flexion des bras flexibles 13a, 13b. On libère ainsi l'accès au fond des rainures 3a, 3b en repoussant les butées 15a, 15b de la rainure. Et on permet ainsi l'insertion complète de l'agrafe 1 sur les éléments plans.

Comme cela est représenté sur la figure 4, l'élément plan en contact avec les bras flexibles 13a, 13b peut être muni d'une ouverture 16 positionnée de telle sorte que lorsque l'agrafe 1 est bien en placée sur les éléments plans qu'elle maintient l'un à l'autre, les butées 15a, 15b sont positionnés en vis-à-vis de l'ouverture 16 et/ou en prise avec l'un des bords de cette ouverture 16. De cette manière, on permet le relâchement au moins partiel de la flexion des bras flexibles 13a, 13b et on assure le blocage de l'élément plan.

Dans le cas de l'agrafe 1 de l'invention tel qu'elle est représentée sur les figures 3a ou 3b, l'assemblage entre les deux éléments plans est maintenue par la griffe 5 et notamment par la pression appliquée par cette griffe 5 sur l'élément plan avec laquelle elle est en contact. De plus, dans ce mode de réalisation, l'élément plan qui n'est pas en contact direct avec la griffe 5 est également retenu dans l'agrafe 1 par les butées 15a, 15b, portées par les bras flexibles 13a, 13b, et insérées dans l'ouverture 16 aménagée dans cet élément plan. On évite ainsi que cet élément plan ne se déplace par glissement vis-à-vis de l'autre élément plan de l'assemblage.

Lorsque les éléments plans sont métalliques, il est avantageux de choisir le métal constituant l'agrafe 1 pour qu'il présente une dureté supérieure à celui du métal des éléments plans. Il peut s'agir d'un acier ou d'un acier inoxydable. La griffure qui se forme alors sur l'un au moins des éléments plans lors de l'insertion de l'agrafe 1, contribue à maintenir l'agrafe 1 en position et à établir un contact électrique de qualité. Ce contact électrique peut être mis à profit pour propager une masse commune à l'ensemble des éléments métalliques en contact.

La figure 2 représente un exemple d'utilisation d'une agrafe 1 selon l'invention.

Sur cette figure, deux modules photovoltaïques 7 sont respectivement placés sur un rail 6 d'une structure porteuse. Ces modules 7 comprennent chacun un cadre 8 dont une aile 8a forme un premier élément plan qui repose sur un second élément plan 6a du rail 6. Sur le côté gauche de la figure 2, une première agrafe 1 conforme à l'invention a été insérée sur les deux éléments plans 8a, 6a afin de de les maintenir assemblés solidement l'un à l'autre. Sur la droite de cette figure, on a représenté symboliquement le mouvement d'insertion de l'agrafe 1 sur les deux éléments plans 8a, 6a afin de solidariser le second panneau photovoltaïque 7 à la structure porteuse.

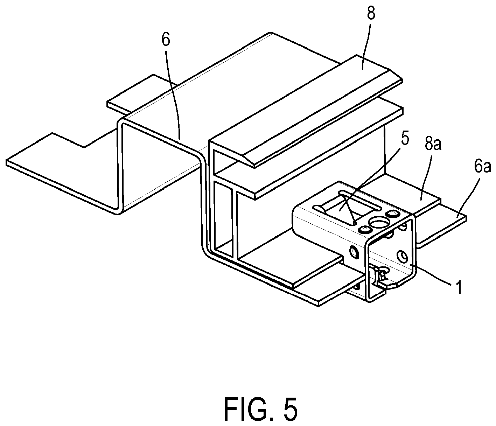

La figure 5 représente un autre exemple d'utilisation d'une agrafe 1 conforme à l'invention. On retrouve sur cette figure l'élément plan 6a du rail 6 et l'élément plan 8a d'un cadre 8 d'un module photovoltaïque. Une section de l'élément plan 6a est également représentée sur la figure 4. On remarque que l'élément plan 6a peut comprendre un encoche 17 permettant de faire pénétrer l'agrafe 1 plus profondément sur cet élément plan.

Bien entendu l'invention n'est pas limitée aux modes de mise en œuvre décrits et on peut y apporter des variantes de réalisation sans sortir du cadre de l'invention tel que défini par les revendications.

Ainsi, et bien que l'on ait montré dans les exemples représentés que chaque paroi latérale 2a, 2b pouvait être munie d'un bras flexible 13&, 13b, il n'est pas nécessaire que les deux parois soient munies d'un tel bras, et il est tout à fait envisageable de ne former qu'un seul de ces bras sur l'une ou l'autre des parois seulement (au sur aucune d'entre elles) sans sortir du cadre de l'invention.

## Revendications

1. Agrafe (1) pour maintenir deux éléments plans assemblés l'un à l'autre niveau de leur face principale, l'un des élément plan étant muni d'une ouverture (16), l'agrafe comprenant une paroi inférieure (2c), une paroi supérieure (2d), l'une au moins de ces parois étant munie d'une griffe (5) configurée pour appliquer une pression sur les deux éléments plans lorsque ceux-ci sont insérés dans les rainures (3a, 3b), deux parois latérales (2a, 2b) munies chacune d'une rainure (3a, 3b) débouchante et configurée pour permettre d'insérer l'agrafe (1) sur les deux éléments plans assemblés et de les maintenir l'un contre l'autre, les parois (2a, 2b, 2c, 2d) définissant un volume fermé de section rectangulaire ou carré; **caractérisée en ce qu'** une au moins des parois latérales (2a, 2b) est munie d'une fente (12a, 12b) débouchant dans la rainure (3a, 3b) et définissant un bras flexible (13a, 13b) solidaire du reste de la paroi (2a, 2b) par l'intermédiaire d'une zone de flexion (14a, 14b), l'extrémité libre du bras flexible (13a, 13b) portant une butée (15a, 15b) saillante dans la rainure (3a, 3b) positionnée en vis-à-vis de l'ouverture (16) de l'élément plan lorsque les éléments plans sont insérés dans les rainures (3a, 3b) pour relâcher au moins partiellement la flexion des bras flexibles (13a, 13b) et assurer le blocage de l'élément plan.

2. Agrafe (1) selon la revendication précédente et selon laquelle les parois (2a, 2b, 2c, 2d) sont formées d'une bande de métal pliée à angle droit.

3. Agrafe (1) selon la revendication précédente dans laquelle les extrémités de la bande de métal présentent des motifs complémentaires emboîtés l'un à l'autre.

4. Agrafe (1) selon la revendication 2 dans laquelle les extrémités de la bande de métal présentent chacune un pliage définissant deux surfaces planes d'extrémité (10a, 10b), les deux surfaces planes d'extrémité (10a, 10b) étant en butée l'une contre l'autre.

5. Agrafe (1) selon la revendication précédente dans laquelle une au moins des surfaces d'extrémités (10a, 10b) présente au moins une languette de blocage (11) pour bloquer tout glissement des surfaces d'extrémité l'une contre l'autre.

6. Agrafe (1) selon l'une des revendications précédentes dans laquelle chaque paroi latérale (2a, 2b) présente un bras flexible (13a, 13b).

## Patentansprüche

1. Klammer (1) zum Zusammenhalten von zwei ebenen Elementen, die an ihrer Hauptfläche miteinander verbunden sind, wobei eines der ebenen Elemente mit einer Öffnung (16) versehen ist, die Klammer umfassend eine untere Wand (2c), eine obere Wand (2d), wobei mindestens eine dieser Wände mit einer Klaue (5) versehen ist, die zum Ausüben eines Drucks auf die zwei ebenen Elemente konfiguriert ist, wenn diese in die Nuten (3a, 3b) eingeführt werden, zwei Seitenwände (2a, 2b), die jeweils mit einer durchgehenden Nut (3a, 3b) versehen und konfiguriert sind, um das Einführen der Klammer (1) in die beiden zusammengesetzten ebenen Elemente und ein Gegeneinanderhalten dieser zu ermöglichen, wobei die Wände (2a, 2b, 2c, 2d) ein geschlossenes Volumen mit rechteckigem oder quadratischem Querschnitt definieren; **dadurch gekennzeichnet, dass** mindestens eine der Seitenwände (2a, 2b) mit einem Schlitz (12a, 12b) versehen ist, der in die Nut (3a, 3b) mündet und einen flexiblen Arm (13a, 13b) definiert, der über eine Biegezone (14a, 14b) mit dem Rest der Wand (2a, 2b) fest verbunden ist, wobei das freie Ende des flexiblen Arms (13a, 13b) einen Anschlag (15a, 15b) trägt, der in die Nut (3a, 3b) vorsteht, die gegenüber der Öffnung (16) des ebenen Elements positioniert ist, wenn die ebenen Elemente zum Lockern mindestens teilweise der Biegung der flexiblen Arme (13a, 13b) und Sicherstellen der Blockierung des ebenen Elements in die Nuten (3a, 3b) eingeführt sind.

2. Klammer (1) nach dem vorstehenden Anspruch und wobei die Wände (2a, 2b, 2c, 2d) aus einem rechtwinklig gebogenen Metallstreifen ausgebildet sind.

3. Klammer (1) nach dem vorstehenden Anspruch, wobei die Enden des Metallstreifens komplementäre Muster aufweisen, die ineinander verschachtelt sind.

4. Klammer (1) nach Anspruch 2, wobei die Enden des Metallstreifens jeweils eine Biegung, die zwei ebene Endoberflächen (10a, 10b) definiert, aufweisen, wobei die zwei ebenen Endoberflächen (10a, 10b) aneinander anliegen.

5. Klammer (1) nach dem vorstehenden Anspruch, wobei mindestens eine der Endoberflächen (10a, 10b) mindestens eine Sperrzunge (11) zum Blockieren jeglichen Gleitens der Endoberflächen gegeneinander aufweist.

6. Klammer (1) nach einem der vorstehenden Ansprüche, wobei jede Seitenwand (2a, 2b) einen flexiblen Arm (13a, 13b) aufweist.

## Claims

1. Clip (1) for holding two planar elements assembled one at the other level of their main face, one of the planar elements being provided with an opening (16), the clip comprising a lower wall (2c), an upper wall (2d), at least one of these walls being provided with a claw (5) configured to apply a pressure on the two planar elements when the latter are inserted into the grooves (3a, 3b), two lateral walls (2a, 2b) each provided with a groove (3a, 3b) through and configured to allow the clip (1) to be inserted on the two flat elements assembled and to hold them against one another, the walls (2a, 2b, 2c, 2d) defining a closed volume of rectangular or square crosssection;
**characterized in that** at least one of the lateral walls (2a, 2b) is provided with a slot (12a, 12b) opening into the groove (3a, 3b) and defining a flexible arm (13a, 13b) integral with the rest of the wall (2a, 2b) via a bending zone (14a, 14b), the free end of the flexible arm (13a, 13b) bearing a stop (15a, 15b) protruding into the groove (3a, 3b) positioned opposite the opening (16) of the planar element when the planar elements are inserted into the grooves (3a, 3b) to at least partially release the flexing of the flexible arms (13a, 13b) and ensure the locking of the planar element.

2. Clip (1) according to any of the preceding claims, according to which the walls (2a, 2b, 2c, 2d) are made of a strip of metal bent at right angles.

3. The clip (1) according to the preceding claim wherein the ends of the metal strip have complementary features nested one to the other.

4. Clip (1) according to claim 2, wherein the ends of the metal strip each have at least one bend defining at least two flat end surfaces (10a, 10b), the two flat end surfaces (10 a, 10b) being in abutment.

5. Clip (1) according to the preceding claim, wherein at least one of the flat end surfaces (10 a, 10b) has at least one blocking tab (11) for blocking any sliding of these surfaces against one another.

6. The clip (1) according to one of the preceding claims wherein each side wall (2a, 2b) has a flexible arm (13a, 13b).
